# DEMANDE DE BREVET EUROPEEN

(11) **EP 0 951 171 A1**
(43) Date de publication de la demande: **20.10.1999**
(21) Numéro de dépôt: 98401936.4
(22) Date de dépôt: 29.07.1998
(51) Int. Cl.: H04N 1/00

(54) **Procédé de communication d'un télécopieur à travers un réseau informatique de type internet, télécopieur et serveur passerelle pour la mise en oeuvre du procédé**

(30) Priorité: 17.04.1998 FR 9804832
(71) Demandeur: SAGEM SA, 75116 Paris (FR)
(72) Inventeur: Charbonnier, Philippe, 78600 Le Mesnil Le Roi (FR)
(74) Mandataire: Bloch, Gérard

(57) **Abrégé**

Procédé d'émission d'une télécopie par un télécopieur (10), à travers un réseau informatique de communication (100) de type Internet, le télécopieur étant agencé pour communiquer à travers un réseau de communication téléphonique (101), procédé au cours duquel:
- le télécopieur (10) émet la télécopie, dans un format de télécopie ordinaire, avec une indication sur la destination de la télécopie, vers un serveur passerelle (20) du réseau informatique (100), à travers ledit réseau de communication téléphonique (101),
- le serveur passerelle (20) transforme le format de la télécopie transmise et reçue en un format de transport à travers le réseau informatique (100) puis retransmet la télécopie vers une adresse électronique de destination sur le réseau informatique (100).

## Description

Dans le domaine de la communication, un réseau informatique tel que l'Internet permet à des équipements de communication (télécopieurs, ordinateurs personnels, etc...) de communiquer entre eux par courrier électronique ou encore, par exemple, en temps réel.

Généralement, les télécopieurs, pour reprendre cet exemple, se connectent à l'Internet par connexion téléphonique auprès d'un fournisseur d'accès à l'Internet, à travers un réseau téléphonique tel que le réseau téléphonique commuté RTC ou le réseau numérique à intégration de services RNIS.

Pour communiquer à travers l'Internet, un télécopieur ne paie, outre le coût éventuel d'un abonnement à son fournisseur d'accès, que le coût de la communication avec le fournisseur d'accès qui est généralement une communication locale, donc bon marché. L'Internet s'avère donc attractif pour communiquer à moindre coût.

Cependant, l'Internet utilise des protocoles de communication spécifiques, tels que les protocoles standards TCP/IP, MIME, etc., qu'un télécopieur doit savoir exploiter pour communiquer à travers l'Internet.

Les télécopieurs ordinaires, agencés pour communiquer à travers un réseau de communication ordinaire, tel que le RTC par exemple, et qui, par définition, n'ont pas la faculté d'exploiter les protocoles de l'Internet, ne peuvent donc pas profiter de l'Internet, et plus généralement de tout autre réseau informatique de type Internet, tels que les réseaux Intranet par exemple.

L'invention propose néanmoins de permettre à de tels télécopieurs de communiquer à travers l'Internet.

A cet effet, l'invention concerne un procédé d'émission d'une télécopie par un télécopieur, à travers un réseau informatique de communication de type Internet, le télécopieur étant agencé pour communiquer à travers un réseau de communication téléphonique, procédé au cours duquel:
- le télécopieur émet la télécopie, dans un format de télécopie ordinaire, avec au moins une indication sur la destination de la télécopie, vers un serveur passerelle du réseau informatique, à travers ledit réseau de communication téléphonique,
- le serveur passerelle transforme le format de la télécopie transmise et reçue en un format de transport à travers le réseau informatique puis retransmet la télécopie vers une adresse électronique de destination sur le réseau informatique.

L'invention consiste donc à faire transiter la télécopie et l'indication sur sa destination par un serveur passerelle qui se charge d'adapter le format de la télécopie pour que celle-ci puisse être acheminée à travers le réseau informatique.

Le télécopieur est "quasi-ordinaire" car il est incapable d'exploiter un réseau informatique tel que l'Internet mais agencé pour transmettre au serveur passerelle une indication sur la destination de la télécopie.

Avantageusement, l'émission de la télécopie dans le format de télécopie ordinaire s'effectue avec l'adresse électronique de destination de la télécopie sur le réseau informatique.

Dans un mode de réalisation particulier, le télécopieur transmet au serveur l'indication sur la destination de la télécopie par une communication vocale, le serveur analyse ladite communication vocale et en déduit l'indication sur la destination de la télécopie par reconnaissance vocale.

Dans un autre mode de réalisation, le télécopieur insère l'indication sur la destination de la télécopie dans une zone spécifique de la télécopie, le serveur analyse le contenu de ladite zone et en déduit l'indication sur la destination de la télécopie par reconnaissance de caractères.

L'invention concerne également un procédé de réception, par un télécopieur, d'une télécopie transmise à travers un réseau informatique de communication de type Internet, dans un format de transport sur ledit réseau informatique, le télécopieur étant agencé pour communiquer à travers un réseau de communication téléphonique, procédé au cours duquel:
- la télécopie est reçue par un serveur passerelle du réseau informatique, qui convertit le format de transport de la télécopie en un format de télécopie ordinaire, puis
- le serveur passerelle retransmet ladite télécopie vers le télécopieur quasi-ordinaire à travers le réseau téléphonique.

Dans ce cas, et avantageusement, à la réception de la télécopie par le serveur, le serveur signale ladite réception au télécopieur qui appelle le serveur afin que celui-ci lui transmette la télécopie.

L'invention concerne aussi un télécopieur pour la mise en oeuvre du procédé d'émission ci-dessus, agencé pour communiquer à travers un réseau de communication téléphonique, comprenant des moyens pour émettre des télécopies, dans un format de télécopie ordinaire, à travers ledit réseau téléphonique, caractérisé par le fait qu'il comprend des moyens pour émettre une indication sur la destination d'une télécopie émise.

L'invention concerne encore un télécopieur pour la mise en oeuvre du procédé de réception ci-dessus, agencé pour communiquer à travers un réseau de communication téléphonique, comprenant des moyens pour recevoir des télécopies transmises à travers ledit réseau téléphonique, caractérisé par le fait qu'il comprend des moyens pour automatiquement appeler un serveur passerelle, après réception d'au moins une signalisation spécifique d'avertissement de la réception d'une télécopie par le serveur passerelle.

L'invention concerne encore un serveur passerelle pour la mise en oeuvre du procédé d'émission ci-dessus, comprenant des moyens pour communiquer à travers un réseau téléphonique de communication et des moyens pour communiquer à travers un réseau informatique de communication, caractérisé par le fait qu'il comprend des moyens pour convertir un format de télécopie ordinaire en un format de télécopie de transport sur le réseau informatique.

L'invention concerne enfin un serveur passerelle pour la mise en oeuvre du procédé de réception ci-dessus, comprenant des moyens pour communiquer à travers un réseau téléphonique de communication et des moyens pour communiquer à travers un réseau informatique de communication, caractérisé par le fait qu'il comprend des moyens pour convertir un format de télécopie de transport sur le réseau informatique en un format de télécopie ordinaire.

Il est clair que la présente demande reste unitaire malgré la revendication d'un procédé d'émission, d'un procédé de réception, d'un télécopieur d'émission, d'un télécopieur de réception, d'un serveur passerelle en émission et d'un serveur passerelle en réception. En effet, tous ces moyens sont liés par la résolution d'un même problème, tel qu'exposé plus haut, qui est d'organiser la communication d'un télécopieur à travers un réseau informatique du type Internet.

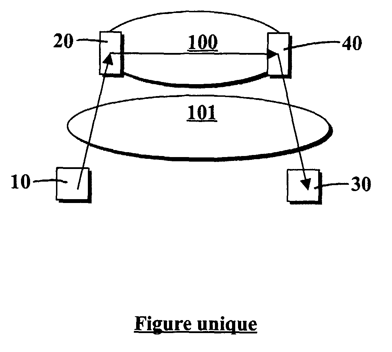

L'invention sera mieux comprise à l'aide de la description suivante d'un mode de réalisation particulier du procédé d'émission et du procédé de réception de l'invention et d'une forme de réalisation particulière du télécopieur et du serveur passerelle pour la mise en oeuvre de ces procédés, en référence à la figure unique annexée qui représente une vue schématique de deux réseaux de communication, du télécopieur et du serveur passerelle de l'invention.

Les procédés d'émission et de réception de l'invention permettent à un télécopieur ordinaire 10, ou plus exactement "quasi-ordinaire" comme cela sera explicité plus loin, d'émettre et de recevoir des télécopies par un réseau informatique de communication, en l'espèce l'Internet 100, par l'intermédiaire d'un serveur passerelle 20 de l'Internet 100.

Par les termes "télécopieur ordinaire", on entend désigner un télécopieur incapable d'exploiter les protocoles de communication à travers l'Internet 100.

Le télécopieur 10 est agencé pour émettre et recevoir des télécopies à travers un réseau téléphonique, en l'espèce le réseau de communication téléphonique commuté RTC 101, en exécutant un protocole de télécopie, ici le protocole T30, et comprend les éléments classiques d'un télécopieur ordinaire, tels notamment qu'un bloc d'émission et de réception, un modem, une mémoire de stockage de télécopies, un clavier de saisie, un écran d,affichage, un microprocesseur, une application pour exploiter le protocole de télécopie T30, etc..

Par "application", on entend désigner, comme l'homme du métier le sait bien, un logiciel d'application.

On rappelle ici qu'une télécopie est émise ou reçue par un télécopieur ordinaire, sous la forme d'un fichier de données, dans un format de télécopie ordinaire. Par la suite, on appellera "fichier télécopie" ce fichier de données correspondant à la télécopie.

Le télécopieur 10 comprend en outre une application d'émission de télécopies à travers l'Internet 100, une application de réception de télécopies transmises à travers l'Internet 100, une touche spécifique pour lancer l'application d'émission à travers l'Internet 100, un microphone et un haut-parleur.

L'application d'émission de télécopies à travers l'Internet 100 sera explicitée dans la description du procédé d'émission d'une télécopie à travers l'Internet 100. Quant à l'application de réception de télécopies à travers l'Internet 100, elle est agencée pour reconnaître une courte signalisation spécifique d'avertissement de la réception d'une télécopie par le serveur 20 et pour appeler automatiquement le serveur 20, après réception d'une telle signalisation.

Le télécopieur 10, bien qu'il soit incapable d'exploiter les protocoles de communication à travers l'Internet 100, comprend néanmoins une application d'émission à travers l'Internet 100 et une application de réception d'une télécopie transmise à travers l'Internet 100. Le télécopieur 10 est donc, pour cette raison, qualifié de télécopieur "quasi-ordinaire".

Le serveur passerelle 20, directement connecté à l'Internet 100, est agencé pour communiquer à travers l'Internet 100 ainsi qu'à travers le réseau téléphonique 101. Il comprend notamment un bloc d'émission et de réception, un modem, une mémoire de stockage de télécopies sous forme de fichiers télécopies, une mémoire de stockage d'un répertoire de correspondants, une application de contrôle d'identité, une application de retransmission à travers l'Internet 100 d'une télécopie reçue par le réseau téléphonique 101, comportant un programme de reconnaissance vocale, et une application de retransmission à travers le réseau téléphonique 101 d'une télécopie reçue par l'Internet 100, comportant un programme d'exécution d'un protocole de transmission de télécopie, en l'espèce le protocole T30.

Le répertoire de correspondants contient les identités d'une pluralité de télécopieurs autorisés à passer par le serveur passerelle 20 pour transmettre une télécopie à travers l'Internet 100, ainsi que des mots de passe et des adresses électriques sur l'Internet 100, associés à ces identités de télécopieurs. On notera que le télécopieur 10 dispose d'une adresse électronique auprès du serveur 20, l'identité, le mot de passe et l'adresse électronique du télécopieur 10 sont enregistrés dans le répertoire de correspondants du serveur 20.

L'application de contrôle d'identité est destinée à contrôler l'accès au serveur passerelle 20, comme cela sera expliqué plus loin.

L'application de retransmission à travers l'Internet 100 est agencée, à la réception d'un appel entrant par le réseau téléphonique 101, pour analyser une communication vocale et convertir le format de télécopie ordinaire de la télécopie reçue en un format de transport à travers l'Internet 100, comme cela sera plus précisément explicité dans la description du procédé d'émission à travers l'Internet 100.

L'application de retransmission à travers le réseau téléphonique 101 est agencée, à la réception d'une télécopie par l'Internet 100, pour convertir le format de transport de la télécopie reçue en un format de télécopie ordinaire et pour envoyer au télécopieur auquel est destinée la télécopie une courte signalisation pour l'avertir de la réception de la télécopie.

### Procédé d'émission d'une télécopie à travers l'Internet

Le procédé d'émission d'une télécopie, à travers l'Internet 100, depuis le télécopieur 10 vers un télécopieur 30 agencé pour communiquer à travers l'Internet 100, va maintenant être décrit.

Le télécopieur 30 dispose d'une adresse électronique sur l'Internet 100, auprès d'un fournisseur 40 d'accès à l'Internet 100. On rappelle que le télécopieur 10 dispose également d'une adresse électronique sur l'Internet 100, auprès du fournisseur d'accès 20.

La télécopie est enregistrée en mémoire, sous forme d'un fichier télécopie, dans le télécopieur 10. Un opérateur, par appui sur la touche d'émission à travers l'Internet 100, lance l'application d'émission de la télécopie à travers l'Internet 100. Le télécopieur 10 appelle le serveur 20 par son numéro d'appel téléphonique sur le réseau 101, et le télécopieur 10 et le serveur 20 établissent une communication.

Par un message vocal diffusé au haut-parleur du télécopieur 10, le serveur 20 demande à l'opérateur son identité et son mot de passe sur le réseau de l'Internet 100.

L'opérateur du télécopieur 10 prononce et saisit au microphose l'identité et le mot de passe du télécopieur 10. Toutes ces informations (identité et mot de passe) sont transmises au serveur passerelle 20 par une communication vocale.

En réception, le serveur 20 lance l'application de contrôle d'identité. Il analyse la communication vocale et, par reconnaissance vocale, en déduit l'identité et le mot de passe du télécopieur 10 qu'il compare respectivement à celles et ceux contenus dans son répertoire de correspondants. L'identité et le mot de passe du télécopieur étant répertoriés dans le répertoire de correspondants, du serveur 20, celui-ci valide l'accès du télécopieur 10 et le signale à l'opérateur du télécopieur 10 par un message vocal de validation. Le télécopieur 20 transmet alors au serveur passerelle 20 la télécopie, par le protocole T30, et à la demande du serveur 20, saisit au microphone et transmet au serveur 20 l'adresse électronique de destination de la télécopie, autrement dit l'adresse électronique du télécopieur 30, par une communication vocale. On rappelle ici que la télécopie transmise et reçue est sous la forme d'un fichier télécopie, et on soulignera que l'adresse électronique de destination de la télécopie constitue une indication sur la destination de la télécopie. Plus le serveur 20 lance l'application de retransmission de la télécopie à travers l'Internet 100. L'exécution de cette application va maintenant être décrite.

Le serveur 20 analyse la communication vocale et, par reconnaissance vocale, en déduit l'adresse de destination de la télécopie sur l'Internet 100. Puis le serveur passerelle 20 joint la télécopie à un courrier électronique et insère l'adresse électronique de destination de la télécopie dans un champ de destination d'un en-tête du courrier. Enfin, le serveur 20 transforme le format du courrier en un format de transport sur l'Internet 100, compatible avec les protocoles de communication à travers l'Internet 100, en l'espèce le protocole standard TCP/IP, et convertit ainsi le format de la télécopie reçue, qui est un format de télécopie ordinaire, en un format de transport à travers l'Internet 100.

Par définition, un format de télécopie ordinaire correspond au format d'une télécopie transmise entre deux télécopieurs ordinaires, à travers un réseau téléphonique.

Puis, le serveur 20 retransmet la télécopie, dans le courrier électronique, à travers l'Internet 100 qui l'achemine vers l'adresse électronique du télécopieur 30.

### Procédé de réception d'une télécopie transmise à travers l'Internet

Le procédé de réception par le télécopieur 10 d'une télécopie transmise à travers l'Internet 100, va maintenant être décrit.

En réception, le serveur passerelle 20 reçoit la télécopie, sous la forme d'un fichier télécopie, dans un format de transport sur l'Internet 100. La télécopie reçue est ici contenue dans un courrier électronique comprenant, dans un en-tête, un champ spécifique contenant l'adresse électronique de la destination de la télécopie, autrement dit l'adresse électronique du télécopieur 10.

A la réception du courrier, le serveur passerelle 20 lance l'application de retransmission de la télécopie à travers le réseau téléphonique 101, dont l'exécution va maintenant être décrite.

Le serveur passerelle 20 extrait du courrier reçu la télécopie ainsi que l'adresse électronique du télécopieur 10 qu'il recherche dans son répertoire de correspondants. L'adresse électronique du télécopieur 10 étant associée au numéro d'appel téléphonique du télécopieur 10 dans le répertoire de correspondants du serveur 20, celui-ci extrait du répertoire ce numéro d'appel téléphonique. Puis le serveur 20 convertit le format de la télécopie en un format de télécopie ordinaire, stocke en mémoire la télécopie au format ordinaire et appelle le télécopieur 10 par le réseau téléphonique 101, à l'aide de son numéro d'appel téléphonique trouvé dans le répertoire de correspondants.

On pourrait également envisager que le courrier contienne, dans un champ spécifique, le numéro d'appel téléphonique du télécopieur auquel est destinée la télécopie. Dans ce cas, le serveur passerelle extrairait ce numéro du courrier, et non pas de son répertoire de correspondants.

Au "décrochage" du télécopieur 10, le serveur 20 transmet au télécopieur 10 une courte signalisation spécifique que le télécopieur 10, à l'aide de son application de réception de télécopie à travers l'Internet 100, reconnaît comme un avertissement, une notification, de la réception de la télécopie.

Le serveur passerelle 20 raccroche, en interrompant ainsi la communication avec le télécopieur 10.

Puis, automatiquement, le télécopieur 10 appelle le serveur 20, à travers le réseau téléphonique 101, et, au "décrochage" du serveur 20, celui-ci transmet la télécopie, sous la forme d'un fichier télécopie, au format de télécopie ordinaire, au télécopieur 10, par le protocole de télécopie T30.

Dans une variante, le télécopieur est abonné à un service, en l'espèce le service CLASS de France Télécom, par le biais duquel, à la réception d'un appel, il est informé du numéro d'appel téléphonique de l'appelant.

A la réception de l'appel du serveur passerelle, le télécopieur ne décroche pas la ligne mais, à l'aide du numéro d'appel téléphonique fourni par le service CLASS, reconnaît que l'appelant est le serveur passerelle et en déduit automatiquement qu'une télécopie a été reçue pour lui par le serveur passerelle. Dans ce cas, l'appel du serveur passerelle au télécopieur constitue en soi-même une signalisation pour avertir le télécopieur de la réception de la télécopie.

Sur le réseau téléphonique RNIS (Réseau Numérique à Intégration de Services), on pourrait utiliser un service de messages courts existants pour faire cette notification.

On pourrait bien sûr envisager que le serveur passerelle appelle le télécopieur et, au "décrochage" de celui-ci, établisse une communication au cours de laquelle il lui transmet la télécopie, par le protocole de télécopie T30, comme un télécopieur ordinaire le ferait.

Un autre mode de réalisation du procédé d'émission de la télécopie et une autre forme de réalisation du télécopieur et du serveur passerelle pour la mise en oeuvre de ce procédé, ne diffèrent de la description qui précède que par ce qui va maintenant être décrit.

Dans cette autre forme de réalisation, le télécopieur et le serveur passerelle comprennent respectivement une application d'émission de télécopies à travers l'Internet 100 et une application de retransmission, à travers l'Internet 100, de télécopies reçues par le réseau téléphonique 101, différentes de celles précédemment décrites. En outre, le télécopieur comprend une mémoire contenant son identité et son mot de passe.

L'application d'émission de télécopies à travers l'Internet 100, du télécopieur est destinée à insérer une indication sur la destination finale de chaque télécopie à transmettre au serveur 20, en l'espèce l'adresse électronique de destination de la télécopie sur l'Internet 100, dans une zone spécifique de la télécopie.

Quant à l'application de retransmission, à travers l'Internet 100, du serveur passerelle, elle est agencée pour analyser dans chaque télécopie reçue par le réseau téléphonique 101, le contenu de la zone spécifique de la télécopie et, par reconnaissance optique de caractères, en déduire la destination finale de la télécopie.

### Procédé d'émission d'une télécopie à travers l'Internet

Seules les étapes du procédé différant de celles du procédé d'émission précédemment décrit vont être explicitées.

En émission, le télécopieur insère l'adresse électronique de destination de la télécopie sur l'Internet 100, dans une zone spécifique et prédéfinie de la télécopie, ainsi que son identité et son mot de passe dans une autre zone spécifique et prédéfinie de la télécopie, puis émet la télécopie vers le serveur passerelle, à travers le réseau téléphonique 101, suivant le protocole T30. On soulignera que l'insertion, dans la télécopie, de l'indication sur la destination finale de la télécopie s'effectue ici dans la télécopie sous forme de fichier télécopie.

En réception, le serveur passerelle lance son application de contrôle d'identité : il analyse, saisit, le contenu de la zone spécifique contenant l'identité et le mot de passe du télécopieur et, par reconnaissance optique de caractères, en déduit l'identité et le mot de passe du télécopieur émetteur. Il compare cette identité et ce mot de passe avec celles et ceux contenus dans le répertoire de correspondants et, après validation, lance l'application de retransmission à travers l'Internet 100.

Le serveur passerelle analyse le contenu de la zone spécifique contenant l'adresse de destination de la télécopie et, par reconnaissance optique de caractères, le serveur passerelle en déduit l'adresse de destination de la télécopie sur l'Internet 100.

Puis le serveur joint la télécopie, en en supprimant le mot de passe du télécopieur émetteur, à un courrier électronique qu'il transmet à travers l'Internet 100 vers l'adresse électronique de destination.

Un troisième mode de réalisation du procédé d'émission de la télécopie et une troisième forme de réalisation du télécopieur et du serveur passerelle pour la mise en oeuvre de ce procédé, ne diffèrent des modes et formes de réalisation de la description qui précède que par ce qui va maintenant être décrit.

Dans le serveur passerelle, il est prévu une mémoire de stockage d'un répertoire de correspondants destinataires contenant les adresses électroniques sur l'Internet 100 d'une pluralité de correspondants, associées chacune à une référence de correspondant. Les informations contenues dans cette mémoire sont enregistrées par le serveur passerelle au cours d'une étape préalable à la transmission de télécopies.

Le télécopieur comprend une application pour exécuter un protocole de télécopie, sensiblement similaire ici au protocole standard T30 et comprenant une trame supplémentaire spécifique pour transmettre la référence d'un télécopieur de destination de la télécopie.

En émission, un opérateur du télécopieur saisit, ici au clavier, la référence du télécopieur auquel il souhaite envoyer la télécopie, et appuie sur la touche spécifique de transmission de la télécopie à travers l'Internet 100. Le télécopieur appelle le serveur passerelle et lui transmet la télécopie par le protocole de télécopie et, dans la trame supplémentaire spécifique du protocole, la référence du télécopieur destinataire.

En réception, le serveur recherche dans son répertoire de correspondants destinataires la référence reçue, celle-ci étant associée à une adresse électronique sur l'Internet 100, retransmet la télécopie vers cette adresse, à travers l'Internet 100, après l'avoir jointe à un courrier électronique et après avoir converti son format en un format de transport sur l'Internet 100.

Bien évidemment, le télécopieur pourrait, de la même manière, transmettre son identitié et son mot de passe dans une trame spécifique de protocole de télécopie.

Au lieu de transmettre la référence dans une trame de protocole de télécopie, on pourrait envisager de la transmettre par une séquence DTMF.

Il pourrait également être prévu de transmettre la référence, par une communication vocale ou encore dans une zone spécifique de la télécopie. Le serveur saisirait alors la référence par reconnaissance vocale, dans l'un des cas, et par reconnaissance de caractères, dans l'autre cas.

De même, au lieu d'être transmise par une communication vocale ou dans une zone spécifique de la télécopie, l'adresse électronique de destination d'une télécopie pourrait être transmise du télécopieur au serveur passerelle dans une trame spécifique du protocole de télécopie, comme explicité dans le troisième mode de réalisation.

Dans la description qui précède, à la réception d'une télécopie, le télécopieur rappelle automatiquement le serveur passerelle après réception d'une signalisation spécifique. On pourrait prévoir que le télécopieur ne rappelle le serveur passerelle qu'après réception d'un nombre prédéfini de telles signalisations spécifiques ou qu'il récupère le ou les télécopies reçues à l'occasion de l'émission d'une télécopie.

## Revendications

1. Procédé d'émission d'une télécopie par un télécopieur (10), à travers un réseau informatique de communication (100) de type Internet, le télécopieur étant agencé pour communiquer à travers un réseau de communication téléphonique (101), procédé au cours duquel:
- le télécopieur (10) émet la télécopie, dans un format de télécopie ordinaire, avec une indication sur la destination de la télécopie, vers un serveur passerelle (20) du réseau informatique (100), à travers ledit réseau de communication téléphonique (101),
- le serveur passerelle (20) transforme le format de la télécopie transmise et reçue en un format de transport à travers le réseau informatique (100) puis retransmet la télécopie vers une adresse électronique de destination sur le réseau informatique (100).

2. Procédé selon la revendication 1, dans lequel l'émission de la télécopie dans le format de télécopie ordinaire s'effectue avec l'adresse électronique de destination de la télécopie sur le réseau informatique (100).

3. Procédé selon l'une des revendications 1 et 2, dans lequel le télécopieur (10) transmet au serveur (20) l'indication sur la destination finale de la télécopie par une communication vocale, le serveur (20) analyse ladite communication vocale et en déduit l'indication sur la destination de la télécopie par reconnaissance vocale.

4. Procédé selon l'une des revendications 1 et 2, dans lequel le télécopieur insère l'indication sur la destination de la télécopie dans une zone spécifique de la télécopie, le serveur analyse le contenu de ladite zone et en déduit l'indication sur la destination de la télécopie par reconnaissance de caractères.

5. Procédé selon l'une des revendications 1 et 2, dans lequel le télécopieur transmet l'indication sur la destination finale de la télécopie par une trame spécifique de protocole de transmission de télécopie.

6. Procédé selon l'une des revendications 1 et 3 à 5, dans lequel, au cours d'une étape préalable à la transmission de la télécopie, le serveur passerelle enregistre des adresses électroniques de correspondants sur le réseau informatique (100), associées chacune à une référence de correspondant et, avec la télécopie transmise, le télécopieur (10) transmet au serveur (20) la référence de correspondant associée à l'adresse de destination de la télécopie sur le réseau informatique (100).

7. Procédé selon l'une des revendications 1 à 6, dans lequel le télécopieur (10) transmet au serveur passerelle (20) des données d'identification et le serveur passerelle (20) contrôle l'identité du télécopieur (10).

8. Procédé selon la revendication 7, dans lequel le télécopieur (10) transmet au serveur (20) lesdites données d'identification par une communication vocale, le serveur (20) analyse ladite communication vocale et en déduit l'identité du télécopieur (10) par reconnaissance vocale.

9. Procédé selon la revendication 7, dans lequel le télécopieur insère lesdites données d'identification dans une zone spécifique de la télécopie, le serveur analyse le contenu de ladite zone et en déduit l'identité du télécopieur par reconnaissance de caractères.

10. Procédé de réception, par un télécopieur (10), d'une télécopie transmise à travers un réseau informatique de communication (100) de type Internet, dans un format de transport sur ledit réseau informatique (100), le télécopieur (10) étant agencé pour communiquer à travers un réseau de communication téléphonique (101), procédé au cours duquel:
- la télécopie est reçue par un serveur passerelle (20) du réseau informatique (100), qui convertit le format de transport de la télécopie en un format de télécopie ordinaire, puis
- le serveur passerelle (20) retransmet ladite télécopie vers le télécopieur à travers le réseau téléphonique (101).

11. Procédé selon la revendication 10, dans lequel, à la réception de la télécopie par le serveur (20), le serveur (20) signale ladite réception au télécopieur (10) qui appelle le serveur (20) afin que celui-ci lui transmette la télécopie.

12. Télécopieur pour la mise en oeuvre du procédé selon la revendication 1, agencé pour communiquer à travers un réseau de communication téléphonique (101), comprenant des moyens pour émettre des télécopies, dans un format de télécopie ordinaire, à travers ledit réseau téléphonique (101), caractérisé par le fait qu'il comprend des moyens pour émettre une indication sur la destination finale d'une télécopie émise.

13. Télécopieur selon la revendication 12, comprenant des moyens pour émettre des données d'identification.

14. Télécopieur pour la mise en oeuvre du procédé de la revendication 10, agencé pour communiquer à travers un réseau de communication téléphonique (101), comprenant des moyens pour recevoir des télécopies transmises à travers ledit réseau téléphonique (101), caractérisé par le fait qu'il comprend des moyens pour automatiquement appeler un serveur passerelle (20), après réception d'au moins une signalisation spécifique d'avertissement de la réception d'une télécopie par le serveur passerelle (20).

15. Serveur passerelle pour la mise en oeuvre du procédé de la revendication 1, comprenant des moyens pour communiquer à travers un réseau téléphonique de communication (10) et des moyens pour communiquer à travers un réseau informatique de communication (10), caractérisé par le fait qu'il comprend des moyens pour convertir un format de télécopie ordinaire en un format de télécopie de transport sur le réseau informatique (100).

16. Serveur passerelle selon la revendication 15, comprenant des moyens de reconnaissance vocale.

17. Serveur passerelle selon l'une des revendications 15 et 16, comprenant des moyens de reconnaissance de caractères.

18. Serveur passerelle selon l'une des revendications 15 à 17, comprenant des moyens pour contrôler l'identité d'un correspondant.

19. Serveur passerelle pour la mise en oeuvre du procédé de la revendication 10, comprenant des moyens pour communiquer à travers un réseau téléphonique de communication (101) et des moyens pour communiquer à travers un réseau informatique de communication (100), caractérisé par le fait qu'il comprend des moyens pour convertir un format de télécopie de transport sur le réseau informatique (100) en un format de télécopie ordinaire.

20. Serveur passerelle selon la revendication 19, comprenant des moyens pour émettre une signalisation d'avertissement de la réception d'une télécopie vers un télécopieur, après réception de ladite télécopie.
